# FASCICULE DE BREVET EUROPEEN

(11) **EP 3 359 408 B1**
(45) Date de publication et mention de la délivrance du brevet: **18.12.2019**
(21) Numéro de dépôt: 16733166.9
(22) Date de dépôt: 08.06.2016
(51) Int. Cl.: B60K 15/063, B60G 3/20, B60G 7/00, B60K 15/073

(54) **ENSEMBLE DE TRAIN ARRIÈRE ROULANT POUR VÉHICULE AUTOMOBILE INTÉGRANT UN RÉSERVOIR**
BERÄDERTE HINTERACHSENANORDNUNG FÜR KRAFTFAHRZEUG MIT EINEM TANK
WHEELED REAR AXLE ASSEMBLY FOR MOTOR VEHICLE INCORPORATING A TANK

(30) Priorité: 02.10.2015 FR 1559398
(43) Date de publication de la demande: 15.08.2018
(73) Titulaire: Renault S.A.S., 92100 Boulogne-Billancourt (FR)
(72) Inventeur: EJARQUE, Pascal, 78370 Plaisir (FR)
(86) Numéro de dépôt international: PCT/FR2016/051370
(87) Numéro de publication internationale: WO 2017/055694

(56) Documents cités:
- DE-A1- 19 527 335
- DE-U1-202004 000 096
- GB-A- 2 289 875
- JP-A- H 058 643
- US-A1- 2010 051 625

## Description

### DOMAINE TECHNIQUE DE L'INVENTION

L'invention concerne un ensemble de train arrière roulant de véhicule automobile comportant :
- un support central de liaison qui est destiné à être fixé sous une caisse du véhicule et qui comporte au moins une première traverse avant et une deuxième traverse agencée longitudinalement derrière la première traverse avant ;
- au moins deux articulations comportant chacune au moins deux bras inférieurs de suspension dont chacun relie un porte-fusée associé avec un côté du support de liaison, chaque bras de suspension étant monté pivotant autour d'un axe globalement longitudinal sur la première et la deuxième traverses du support de liaison.

### ARRIERE PLAN TECHNIQUE DE L'INVENTION

On connaît déjà des véhicules équipés de trains arrière de ce type. Un tel agencement de suspension est généralement connu sous le nom de suspension multi-bras. Le document DE 19527335 décrit un un agencement de suspension selon le préambule de la revendication 1.

Le support central sur lequel les deux bras de suspension sont articulés est classiquement formé par un berceau porteur. Il s'agit d'une structure rigide qui s'étend transversalement entre les deux bras pour assurer la raideur transversale du train arrière roulant.

Le berceau porteur peut être fixé sous la caisse du véhicule, voire faire partie intégrante de la caisse du véhicule.

En outre, le berceau a aussi pour rôle de servir de support à différents éléments du véhicule, et notamment au réservoir. De ce fait, le berceau est une structure complexe à réaliser. Le berceau est généralement réalisé de tubes d'acier ou d'aluminium soudés puis usinés pour permettre le montage au plus juste du réservoir et des éléments de suspension.

En outre, le berceau est une pièce encombrante. Dans le cadre d'un véhicule hybride destiné à comporter une batterie de traction volumineuse, il est peu aisé de réussir à intégrer la batterie, le train arrière et le réservoir sans pour autant empiéter sur l'espace de l'habitacle.

### BREF RESUME DE L'INVENTION

L'invention propose de simplifier l'architecture du train arrière roulant tout en libérant de la place sous la caisse du véhicule. Pour ce faire, l'invention propose un ensemble du type décrit précédemment, caractérisé en ce que le support de liaison comporte au moins un réservoir délimité par une paroi externe rigide, la première et la deuxième traverses étant liées rigidement entre elles par l'intermédiaire de la paroi du réservoir.

Selon d'autres caractéristiques de l'invention :
- le support de liaison comporte une troisième traverse arrière, la deuxième traverse étant interposée longitudinalement entre la première et la troisième traverses ;
- au moins l'une des traverses est réalisée au moins en partie venue de matière avec la paroi du réservoir ;
- la première traverse avant est une pièce distincte qui est fixée rigidement à la paroi du réservoir ;
- chaque articulation comporte au moins un bras supérieur de suspension qui relie la première traverse avant avec un porte-fusée associé parallèlement à l'un des bras inférieur de suspension ;
- le réservoir de carburant est destiné à être fixé sous une caisse de véhicule automobile uniquement par l'intermédiaire de la première traverse avant et de la troisième traverse arrière ;
- les bras inférieurs s'étendent au-dessous du réservoir ;
- le réservoir présente un volume de forme globalement parallélépipédique qui présente une longueur transversale sensiblement équivalente à celle des traverses ;
- une face inférieure du réservoir présente une goulotte s'étendant transversalement entre la première traverse avant et la deuxième traverse et qui est destiné à loger des arbres de roue.

L'invention concerne aussi un véhicule automobile équipé d'un ensemble de train arrière roulant réalisé selon les enseignements de l'invention.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective montrant le dessus d'un ensemble de train roulant intégrant un moteur réalisé selon les enseignements de l'invention ;
- la figure 2 est une vue de dessous de l'ensemble de la figure 1 ;
- la figure 3 est une vue de dessus de l'ensemble de la figure 1 ;
- la figure 4 est une vue de détail en perspective qui représente un porte-fusée monté sur une articulation de l'ensemble de la figure 1 ;
- la figure 5 est une vue de côté qui représente une caisse de véhicule automobile équipée de l'ensemble de la figure 1 ;
- la figure 6 est une vue de dessous du véhicule de la figure 5.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif des orientations longitudinale dirigée d'arrière en avant selon le sens de déplacement du véhicule, transversale, et verticale dirigée de bas en haut selon un sens orthogonal à la route.

Les termes "interne" et "externe" seront utilisés en fonction de la proximité d'un élément avec l'axe longitudinal médian du véhicule.

Les termes "intérieur" et "extérieur" seront utilisés en fonction de la position d'un élément par rapport au volume du réservoir 12.

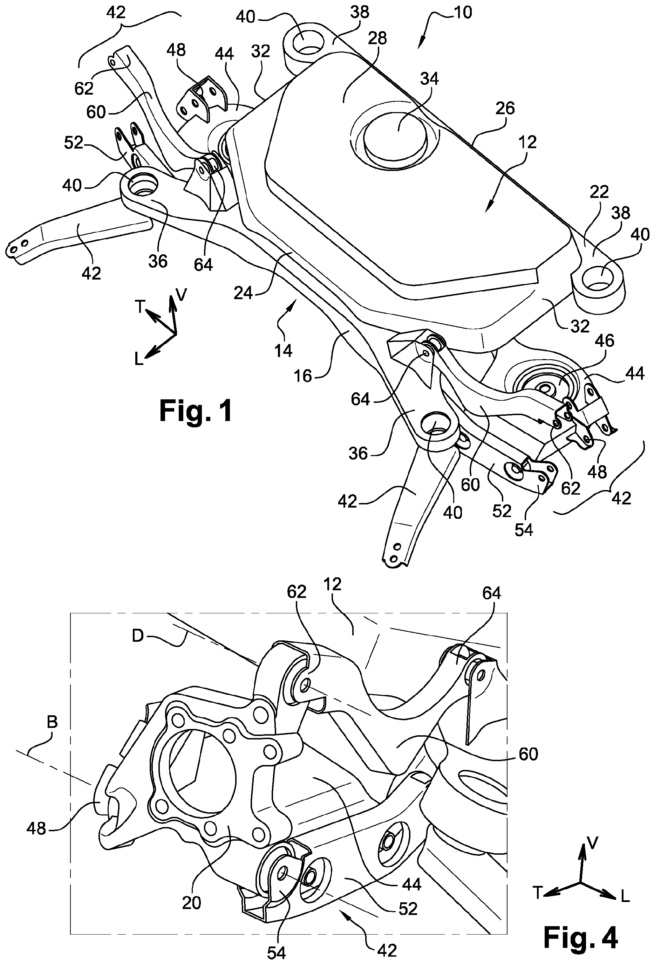

On a représenté à la figure 1 un ensemble 10 de train arrière roulant de véhicule automobile (non représenté) intégrant un réservoir 12 de carburant destiné à alimenter un moteur à combustion (non représenté) du véhicule. Il s'agit ici d'un moteur à combustion qui est destiné à entraîner, directement ou indirectement, en rotation les deux roues arrière du véhicule qui sont destinées à être portées par ledit ensemble 10.

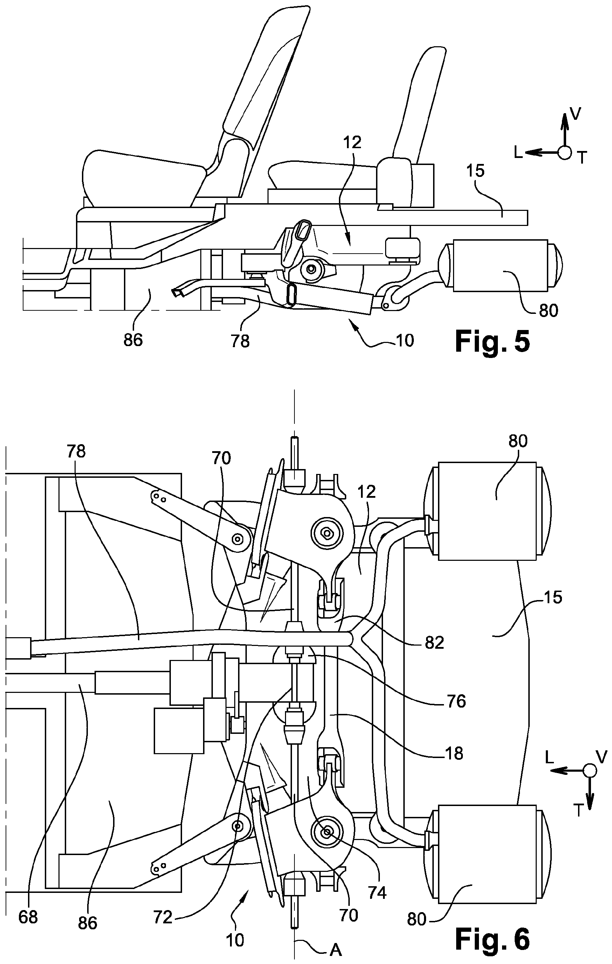

L'ensemble 10 comporte un support 14 central de liaison qui est destiné à être fixé sous une caisse 15 du véhicule. La caisse 15 du véhicule est représentée aux figures 5 et 6.

Comme représenté aux figures 1, 2 et 3, le support 14 de liaison comporte au moins une première traverse 16 avant et une deuxième traverse 18 intermédiaire qui est agencée longitudinalement en arrière de la première traverse 16 avant. Lesdites deux traverses 16, 18 s'étendent transversalement.

Les première et deuxième traverses 16, 18 sont destinées à permettre le montage articulé de porte-fusées 20 comme cela sera expliqué plus en détails par la suite.

Le support 14 de liaison comporte en outre une troisième traverse 22 arrière qui s'étend parallèlement à la première traverse 16. La troisième traverse 22 arrière est agencée longitudinalement en arrière de la deuxième traverse 18 intermédiaire. Ainsi, la deuxième traverse 18 intermédiaire est interposée longitudinalement entre la première traverse 16 avant et la troisième traverse 22 arrière.

Cette troisième traverse 22 arrière a ici pour fonction de participer à la fixation du support 14 de liaison sous la caisse du véhicule en coopération avec la première traverse 16 avant.

Le support 14 de liaison comporte en outre le réservoir 12 de carburant qui est délimité par une paroi. La paroi du réservoir 12 est ici réalisé en une tôle métallique. Le réservoir 12 présente ici un volume de forme globalement parallélépipédique.

La plus grande dimension s'étend transversalement, tandis que la plus petite dimension s'étend verticalement. La dimension transversale du réservoir 12 est sensiblement équivalente à celle du corps des traverses 16, 22 avant et arrière.

Le réservoir 12 est ainsi délimité longitudinalement par une face 24 d'extrémité avant et par une face 26 d'extrémité arrière. Il est délimité verticalement par une face 28 supérieure et par une face 30 inférieure. Le réservoir 12 est aussi délimité transversalement par deux faces 32 latérales.

Le réservoir 12 présente une ouverture 34 faisant communiquer avec l'intérieur du réservoir 12 avec l'extérieur qui s'ouvre dans sa face 28 supérieure. De manière connue, cette ouverture 34 est destinée à être raccordée à des tuyauteries (non représentées).

La première traverse 16 avant et la deuxième traverse 18 intermédiaire sont liées rigidement entre elles par l'intermédiaire de la paroi du réservoir 12. La troisième traverse 22 arrière est aussi fixée à la paroi du réservoir 12.

Avant le montage de l'ensemble 10 sur le véhicule, les traverses 16, 18, 22 sont liées rigidement entre elles uniquement par l'intermédiaire du réservoir 12. Du fait de sa forme, le réservoir 12 présente en effet un grand moment d'inertie qui permet de conférer une grande rigidité au support 14 de liaison, aussi bien en torsion qu'en traction ou compression. Cette grande rigidité du réservoir 12 permet aussi de concevoir des traverses 16, 18, 22 de sections moindre que celles des traverses d'un support de liaison réalisé selon l'état de la technique.

La première traverse 16 avant est ici formée par une pièce rapportée qui est fixée à la face 24 d'extrémité avant du réservoir 12, par exemple par soudage. La traverse 16 avant est ici fixée directement contre la face 24 avant du réservoir 12.

La deuxième traverse 18 intermédiaire s'étend ici sous la face 30 inférieure du réservoir 12. La deuxième traverse 18 est ici divisée dans le sens axial vertical en deux parties. La première partie 18A de la traverse 18 intermédiaire est ici réalisée venue de matière avec la paroi du réservoir 12. La deuxième partie 18B est formée par une pièce rapportée fixée contre la première partie, par exemple par vissage ou par rivetage.

Enfin, la troisième traverse 22 arrière est ici formée par une pièce rapportée qui est fixée à la face 26 d'extrémité arrière du réservoir 12. La traverse 22 arrière est ici fixée directement contre la face 26 arrière du réservoir 12, par exemple par soudage.

Chaque traverse 16, 18, 22 est agencée à l'extérieur du réservoir sur lequel elles sont rapportées.

Chaque extrémité 36 transversale de la première traverse 16 avant et chaque extrémité 38 transversale de la troisième traverse 22 arrière comporte une bride 40 supérieure de fixation sous la caisse 15 du véhicule. La traverse 16 avant est fixée à la caisse 15 par l'intermédiaire de pattes 42.

Le réservoir 12 est ainsi fixé à la caisse 15 du véhicule uniquement par l'intermédiaire de la première traverse 16 avant et de la troisième traverse 22 arrière.

L'ensemble 10 comporte en outre deux porte-fusées 20 arrière qui sont agencés transversalement de part et d'autre du support 14 de liaison. L'un des porte-fusées 20 est représenté à la figure 4. Chaque porte-fusée 20 est destiné à recevoir une roue arrière associée du véhicule à rotation autour d'un axe "A" transversal de rotation, comme cela est représenté schématiquement à la figure 6.

Chaque porte-fusée 20 est destiné à être relié de manière articulée sur un côté du support 14 de liaison par l'intermédiaire d'une articulation 42 comportant plusieurs bras de suspension, ici trois bras de suspension.

Les deux articulations 42 présentent une structure identique et elles sont agencées symétriquement en miroir par rapport à un plan longitudinal vertical médian du support 14 de liaison. Par la suite, on ne décrira qu'une des articulations 42, la description étant applicable par symétrie à l'autre articulation 42.

L'articulation 42 comporte ainsi un premier bras 44 inférieur arrière de suspension formant une bielle qui relie le porte-fusée 20 associé avec le support 14 de liaison. Le premier bras 44 de suspension présente ici une forme de plaque globalement horizontale qui comporte une cuvette 46 destinée à recevoir une extrémité inférieure d'un ressort d'amortisseur (non représenté).

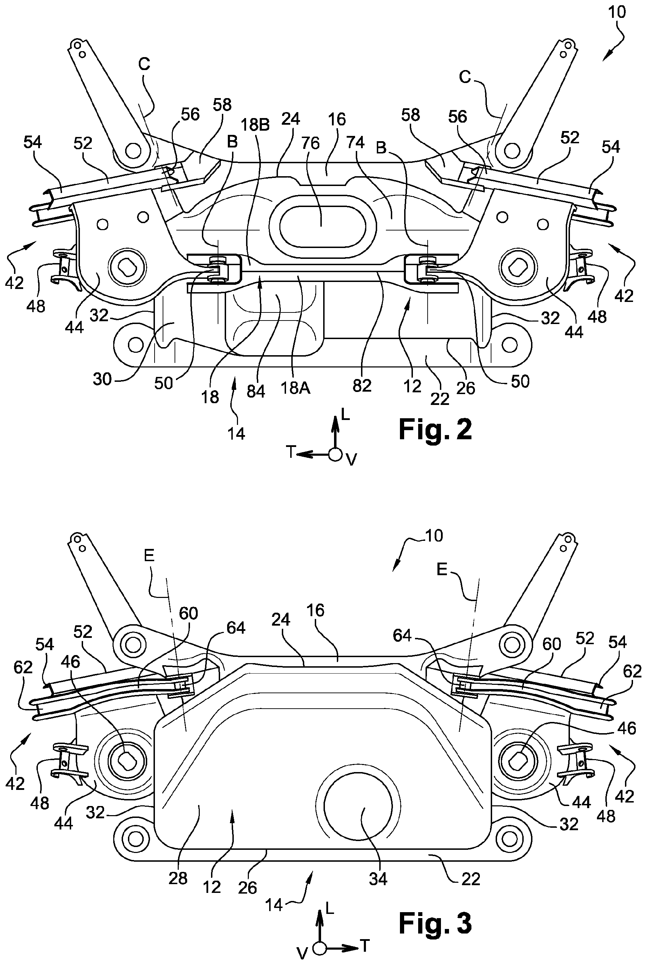

Le premier bras 44 de suspension présente ainsi une première extrémité 48 transversalement externe qui est destinée à être montée pivotante sur le porte-fusée 20 associé autour d'un axe "B" globalement longitudinal, comme représenté à la figure 4. Le premier bras 44 de suspension comporte aussi une deuxième extrémité 50 transversale interne qui est montée pivotante autour d'un axe "C" globalement longitudinal à une extrémité transversale de la deuxième traverse 18 intermédiaire, comme représenté à la figure 2.

L'articulation 42 comporte aussi un deuxième bras 52 transversal inférieur avant formant une bielle qui relie un porte-fusée 20 associé avec le support 14 de liaison. Le deuxième bras 52 inférieur est agencé verticalement au même niveau que le premier bras 44 inférieur associé. Le deuxième bras 52 inférieur est plus particulièrement agencé longitudinalement en avant du premier bras 44 inférieur associé.

Le deuxième bras 52 inférieur de suspension présente une première extrémité 54 transversalement externe qui est destinée à être montée pivotante sur le porte-fusée 20 associé autour de l'axe "B". Le deuxième bras 52 inférieur de suspension comporte aussi une extrémité 56 transversale interne qui est montée pivotante autour d'un axe "C" globalement longitudinal sous la première traverse 16 avant. Le deuxième bras 52 inférieur est plus particulièrement monté pivotant sous la traverse 16 avant par l'intermédiaire d'une première chape 58, visible à la figure 2, qui est fixée à une face inférieure de la traverse 16 avant. La chape 58 est interposée transversalement entre le réservoir 12 et la bride 40 de fixation à la caisse 15. L'extrémité interne du deuxième bras 52 inférieur est agencée verticalement au même niveau que celle du premier bras 44 de suspension.

Les deux bras 44, 52 inférieurs sont ainsi agencés globalement verticalement sous le réservoir 12.

Un tel agencement présentant deux bras 44, 52 inférieurs de suspension permet de conférer à l'articulation 42 du porte-fusée 20 une grande rigidité longitudinale. Le deuxième bras 52 inférieur est ici fixé rigidement au premier bras 44 inférieur associé pour en augmenter la rigidité.

En variante non représentée de l'invention, le premier bras inférieur et le deuxième bras inférieur sont réalisés en une seule pièce.

L'articulation 42 comporte aussi un troisième bras 60 supérieur transversal de suspension. Le bras 60 supérieur relie à la manière d'une bielle un porte-fusée 20 associé jusqu'au support 14 de liaison. Le troisième bras 60 de suspension présente une première extrémité 62 transversalement externe qui est destinée à être montée pivotante sur le porte-fusée 20 associé autour d'un axe "D" globalement longitudinal. Le troisième bras 60 de suspension comporte aussi une extrémité 64 transversale interne qui est montée pivotante autour d'un axe "E" globalement longitudinal sur la traverse 16 avant. Le troisième bras 60 supérieur est plus particulièrement monté pivotant sur la traverse 16 avant par l'intermédiaire d'une deuxième chape 66, visible à la figure 3, qui est fixée à une face supérieure de la traverse 16 avant. La chape 66 est interposée transversalement entre le réservoir 12 et la bride 40 de fixation à la caisse 15. L'extrémité 64 interne du troisième bras 60 supérieur est agencée verticalement au droit que celle du deuxième bras 52 de suspension.

Le bras 60 supérieur a pour fonction d'empêcher le débattement du porte-fusée 20 autour d'un axe vertical, permettant ainsi à la roue arrière de conserver une orientation constante par rapport à la direction longitudinale de déplacement du véhicule. Le bras 60 supérieur s'étend au-dessus du deuxième bras 52 inférieur de suspension. Le bras 60 supérieur est parallèle au deuxième bras 52 inférieur formant ainsi avec le deuxième bras 52 inférieur associé de suspension une articulation en parallélogramme du porte-fusée 20 par rapport au support 14 de liaison.

Les extrémités 48 transversales externes de chaque bras 44, 52, 60 de suspension de l'articulation 42 sont dans un même plan globalement vertical. Chaque porte-fusée 20 est ainsi mobile globalement verticalement par rapport au support 14 de liaison.

L'ensemble 10 est susceptible d'être assemblé préalablement à son montage sur le véhicule automobile. Les différents composants de l'ensemble 10 ainsi assemblés sont solidaires les uns des autres, ce qui rend beaucoup plus simple le positionnement et la fixation de l'ensemble 10 sur la caisse 15 du véhicule. Un tel ensemble 10 peut ainsi être assemblé en un lieu différent du site de montage sur la caisse 15 du véhicule, puis transporté jusqu'au site de montage.

L'ensemble 10 doit permettre le montage des différents équipements du véhicule. Comme représenté à la figure 6, un arbre 68 de transmission longitudinal est susceptible d'entraîner deux arbres 70 de roues transversaux par l'intermédiaire d'un mécanisme 72 de différentiel. Les arbres 70 de roues sont agencés coaxialement aux roues arrière. A cet effet, la face 30 inférieure du réservoir 12 présente un renfoncement en forme de goulotte 74 transversale qui permet d'accueillir les arbres 70 de roues. Cette goulotte 74 est agencée longitudinalement entre la traverse 16 avant et la traverse 18 intermédiaire.

En outre, le centre de la goulotte 74 présente un renfoncement 76 plus prononcé qui permet de loger le mécanisme 72 de différentiel.

Le véhicule comporte aussi une conduite 78 longitudinale d'échappement qui s'étend sous la caisse 15 du véhicule depuis l'avant du véhicule jusqu'à un pot 80 d'échappement situé à une extrémité arrière du véhicule. Cette conduite 78 d'échappement est destinée à passer sous le réservoir 12. A cet effet, une échancrure 82 est ménagée dans la traverse 18 intermédiaire pour permettre le passage de la conduite 78 d'échappement.

Par ailleurs, le réservoir 12 présente aussi, au droit de l'ouverture 34, une protubérance 84 qui correspond à la présence d'une jauge à l'intérieur du réservoir 12.

Lors du déplacement du véhicule, des efforts dynamiques transversaux et longitudinaux agissent sur la caisse 15 du véhicule et/ou sur les porte-fusée 20. La plupart de ces efforts transitent par l'intermédiaire des traverses 16, 18, 22. Le réservoir 12 permet de conférer au support 14 de liaison une grande rigidité.

Un tel agencement est avantageusement plus compact qu'une architecture à berceau comme décrite dans l'état de la technique. L'intégration du réservoir 12 à l'ensemble 10 de train arrière pour lier rigidement les traverses 16, 18, 22 entre elles permet un gain de place permettant par exemple d'agencer une batterie 86 de traction à proximité de l'ensemble 10 de train arrière lorsque le véhicule est un véhicule à motorisation dite "hybride". En outre, un tel ensemble 10 permet avantageusement d'alléger l'arrière du véhicule automobile.

## Revendications

1. Ensemble (10) de train arrière roulant de véhicule automobile comportant :
- un support (14) central de liaison qui est destiné à être fixé sous une caisse (15) du véhicule et qui comporte au moins une première traverse (16) transversale avant et une deuxième traverse (18) transversale agencée derrière la première traverse (16) avant ;
- au moins deux articulations (42) comportant chacune au moins deux bras (44, 52) inférieurs de suspension dont chacun relie un porte-fusée (20) associé avec un côté du support (14) de liaison, chaque bras (44, 52, 60) de suspension étant monté pivotant autour d'un axe globalement longitudinal sur la première et la deuxième traverses (16, 18) du support (14) de liaison ;
**caractérisé en ce que** le support (14) de liaison comporte au moins un réservoir (12) délimité par une paroi externe rigide, la première et la deuxième traverses (16, 18) étant liées rigidement entre elles par l'intermédiaire de la paroi du réservoir (12).

2. Ensemble (10) selon la revendication précédente, **caractérisé en ce que** le support (14) de liaison comporte une troisième traverse (22) arrière, la deuxième traverse (18) étant interposée longitudinalement entre la première et la troisième traverses (16, 22).

3. Ensemble (10) selon la revendication précédente, **caractérisé en ce qu'**au moins l'une des traverses (18) est réalisée au moins en partie venue de matière avec la paroi du réservoir (12).

4. Ensemble (10) selon l'une quelconque des revendications précédentes, **caractérisé en ce que** la première traverse (16) avant est une pièce distincte qui est fixée rigidement à la paroi du réservoir (12).

5. Ensemble (10) selon l'une quelconque des revendications précédentes, **caractérisé en ce que** chaque articulation (42) comporte au moins un bras (60) supérieur de suspension qui relie la première traverse (16) avant avec un porte-fusée (16) associé parallèlement à l'un des bras (52) inférieur de suspension.

6. Ensemble (10) selon l'une quelconque des revendications précédentes, **caractérisé en ce que** le réservoir (10) de carburant est destiné à être fixé sous une caisse (15) de véhicule automobile uniquement par l'intermédiaire de la première traverse (16) avant et de la troisième traverse (22) arrière.

7. Ensemble (10) selon l'une quelconque des revendications précédentes, **caractérisé en ce que** les bras (44, 52) inférieurs s'étendent au-dessous du réservoir (12).

8. Ensemble (10) selon l'une quelconque des revendications précédentes, **caractérisé en ce que** le réservoir (12) présente un volume de forme globalement parallélépipédique qui présente une longueur transversale sensiblement équivalente à celle des traverses (16, 18, 22).

9. Ensemble (10) selon l'une quelconque des revendications précédentes, **caractérisé en ce qu'**une face (30) inférieure du réservoir (12) présente une goulotte (74) s'étendant transversalement entre la première traverse (16) avant et la deuxième traverse (18) et qui est destiné à loger des arbres (70) de roue.

10. Véhicule automobile équipé d'un ensemble (10) de train arrière roulant réalisé selon l'une quelconque des revendications précédentes.

## Patentansprüche

1. Beräderte Hinterachsenanordung (10) für ein Kraftfahrzeug, aufweisend:
- einen mittleren Verbindungsträger (14), der dazu bestimmt ist, unter einer Karosserie (15) des Fahrzeugs befestigt zu sein und der mindestens eine erste, vordere Quertraverse (16) und eine zweite Quertraverse (18), die hinter der ersten, vorderen Traverse (16) angeordnet ist, aufweist;
- mindestens zwei Gelenke (42), jeweils aufweisend mindestens zwei untere Aufhängungsarme (44, 52), von denen jeder einen zugehörigen Nabenträger (20) mit einer Seite des Verbindungsträgers (14) verbindet, wobei jeder Aufhängungsarm (44, 52, 60) um eine allgemein in Längsrichtung verlaufende Achse auf der ersten und der zweiten Traverse (16, 18) des Verbindungsträgers (14) schwenkbar gelagert ist;
**dadurch gekennzeichnet, dass** der Verbindungsträger (14) mindestens einen Tank (12) aufweist, der von einer starren Außenwand begrenzt ist, wobei die erste und die zweite Traverse (16, 18) mittels der Wand des Tanks (12) starr miteinander verbunden sind.

2. Anordnung (10) nach dem vorhergehenden Anspruch, **dadurch gekennzeichnet, dass** der Verbindungsträger (14) eine dritte, hintere Traverse (22) aufweist, wobei die zweite Traverse (18) in Längsrichtung zwischen der ersten und der dritten Traverse (16, 22) angeordnet ist.

3. Anordnung (10) nach dem vorhergehenden Anspruch, **dadurch gekennzeichnet, dass** mindestens eine der Traversen (18) zumindest teilweise einstückig mit der Wand des Tanks (12) ausgeführt ist.

4. Anordnung (10) nach einem der vorhergehenden Ansprüche, **dadurch gekennzeichnet, dass** die erste, vordere Traverse (16) ein separates Teil ist, das starr an der Wand des Tanks (12) befestigt ist.

5. Anordnung (10) nach einem der vorhergehenden Ansprüche, **dadurch gekennzeichnet, dass** jedes Gelenk (42) mindestens einen oberen Aufhängungsarm (60) aufweist, der die erste, vordere Traverse (16) mit einem Nabenträger (16) verbindet, der parallel mit einem der unteren Aufhängungsarme (52) in Verbindung steht.

6. Anordnung (10) nach einem der vorhergehenden Ansprüche, **dadurch gekennzeichnet, dass** der Kraftstofftank (10) dazu bestimmt ist, nur mittels der ersten, vorderen Traverse (16) und der dritten, hinteren Traverse (22) unter einer Kraftfahrzeugkarosserie (15) befestigt zu sein.

7. Anordnung (10) nach einem der vorhergehenden Ansprüche, **dadurch gekennzeichnet, dass** sich die unteren Arme (44, 52) unter dem Tank (12) erstrecken.

8. Anordnung (10) nach einem der vorhergehenden Ansprüche, **dadurch gekennzeichnet, dass** der Tank (12) ein allgemein quaderförmiges Volumen aufweist, das eine Querlänge aufweist, die im Wesentlichen zu derjenigen der Traversen (16, 18, 22) äquivalent ist.

9. Anordnung (10) nach einem der vorhergehenden Ansprüche, **dadurch gekennzeichnet, dass** eine untere Seite (30) des Tanks (12) eine Rinne (74) aufweist, die sich quer zwischen der ersten, vorderen Traverse (16) und der zweiten Traverse (18) erstreckt und die dazu bestimmt ist, Radwellen (70) aufzunehmen.

10. Kraftfahrzeug, das mit einer beräderten Hinterachsenanordung (10) nach einem der vorhergehenden Ansprüche ausgerüstet ist.

## Claims

1. Wheeled rear axle assembly (10) of a motor vehicle, comprising:
- a central connection support (14) which is intended to be fastened below a body (15) of the vehicle and which comprises at least a first front transverse crossmember (16) and a second transverse crossmember (18) arranged behind the first front crossmember (16);
- at least two articulations (42) each comprising at least two lower suspension arms (44, 52), each of which connects an associated steering knuckle (20) with one side of the connection support (14), each suspension arm (44, 52, 60) being mounted pivotably about a generally longitudinal axis on the first and second crossmembers (16, 18) of the connection support (14);
**characterized in that** the connection support (14) comprises at least one tank (12) delimited by a rigid outer wall, the first and second crossmembers (16, 18) being rigidly connected to one another via the wall of the tank (12).

2. Assembly (10) according to the preceding claim, **characterized in that** the connection support (14) comprises a third rear crossmember (22), the second crossmember (18) being interposed longitudinally between the first and third crossmembers (16, 22).

3. Assembly (10) according to the preceding claim, **characterized in that** at least one of the crossmembers (18) is at least in part integrally formed with the wall of the tank (12).

4. Assembly (10) according to any one of the preceding claims, **characterized in that** the first front crossmember (16) is a separate part which is rigidly fastened to the wall of the tank (12).

5. Assembly (10) according to any one of the preceding claims, **characterized in that** each articulation (42) comprises at least one upper suspension arm (60) which connects the first front crossmember (16) with an associated steering knuckle (16) parallel to one of the lower suspension arms (52).

6. Assembly (10) according to any one of the preceding claims, **characterized in that** the fuel tank (10) is intended to be fastened below a motor vehicle body (15) only via the first front crossmember (16) and the third rear crossmember (22).

7. Assembly (10) according to any one of the preceding claims, **characterized in that** the lower arms (44, 52) extend beneath the tank (12).

8. Assembly (10) according to any one of the preceding claims, **characterized in that** the tank (12) has a volume of generally parallelepipedal shape which has a transverse length substantially equivalent to that of the crossmembers (16, 18, 22).

9. Assembly (10) according to any one of the preceding claims, **characterized in that** a lower face (30) of the tank (12) has a trough (74) extending transversely between the first front crossmember (16) and the second crossmember (18) and which is intended to house wheel shafts (70).

10. Motor vehicle equipped with a wheeled rear axle assembly (10) produced according to any one of the preceding claims.
